# EUROPEAN PATENT SPECIFICATION

(11) **EP 3 764 228 B1**
(45) Date of publication and mention of the grant of the patent: **30.11.2022**
(21) Application number: 19185321.7
(22) Date of filing: 09.07.2019
(51) Int. Cl.: H04L 9/40, G06F 9/46, G06Q 10/06

(54) **SYSTEM FOR CONTROLLING ACCESS TO DIGITAL DATA AND ALGORITHMS**
SYSTEM ZUR STEUERUNG DES ZUGRIFFS AUF DIGITALE DATEN UND ALGORITHMEN
SYSTÈME DE CONTRÔLE D'ACCÈS À DES DONNÉES NUMÉRIQUES ET À DES ALGORITHMES

(43) Date of publication of application: 13.01.2021
(60) Divisional application: 22201929.1
(73) Proprietor: Hexagon Technology Center GmbH, 9435 Heerbrugg (CH)
(72) Inventor: DURBIN, Mark, Oxfordshire, OX15 5SG (GB)
(74) Representative: Kaminski Harmann

(56) References cited:
- EP-A1- 3 156 898
- US-A1- 2008 005 287
- US-A1- 2008 005 729
- US-A1- 2008 010 631

## Description

The present invention pertains to a computer system and to a computer-implemented method for controlling access to digital data and algorithms, the system comprising a multitude of local systems that are provided at a plurality of remote locations and have a data connection that allows transferring digital data between the local systems, wherein data acquisition devices and data processing unit are provided at a plurality of the local systems, the data processing units being configured to process raw data from the data acquisition devices.

In the field of distributed digital services, due to their global distribution, the decision whether to localise data and algorithms at the "edge" or in the "cloud" becomes an important issue in terms of management and quick availability of the data and algorithms, mainly dominated by technical limitations like transmission, but also in view of the legal situation as a plurality of jurisdictions might be potentially affected and various legal or contractual provisions may apply. Data may be generated with a local device in a certain place with local constraints and limitations, e. g. regarding processing power or implemented algorithms, and subsequently transferred to another location where further data processing is performed and new data and information are generated. In turn, data and information will be sent back to the local device where the process originated. The flow of data, algorithms, software modules or libraries may occur across national borders and jurisdictions and may be difficult to follow or even control. Legal constraints may directly affect the implementation of technical solutions, e. g. in case of international sanctions or technology export restrictions. This means that it has to be ensured that technology, data and algorithms remain within the domains where they may be lawfully shared. Therefore, a corresponding computer system has to provide a controlled access to digital data and algorithms which automatically prevent misuse and misallocation.

In the patent application EP18155182.1, a system "Edge Client" (EC) is described that provides extensible Internet of Things (IoT) edge solution, process automation, secure edge connectivity and dynamically changeable workflows. It can be used together with a system and data integration software such as "EdgeFrontier" (EF) of Intergraph Corp., Huntsville. Some integration tools that can be used with EC are disclosed in documents EP 3 156 898 A1, US 2008/0005287 A1, US 2008/ 0010631 A1 or US 7,735,060 B2.

Since the locations may be scattered around the world, data and algorithms from a multitude of different locations and jurisdictions may be involved, whereby problems may arise from this distribution, particularly due to different technical constraints, legal frameworks or technology transfer restrictions.

It is therefore an object of the present invention to provide an improved method and system for controlling access to digital data.

It is a particular object of the present invention to provide such a method and system that reduces or eliminates legal risks when transferring data between remote locations.

It is another object of the present invention to provide such a method and system that allow customizing processing data, particularly raw data, according to the needs of a requester or according to a role of the requester. In this context, raw data comprises data generated or initially processed at a particular location in a first step, with more steps, particularly processing steps, to follow at the same or different locations.

At least one of these objects is achieved by the system according to claim 1, the server computer according to claim 9, the client computer according to claim 10, the method according to claim 13 and/or the dependent claims of the present invention.

A system according to the invention may be configured, deployed and operated using a Computer Aided System Engineering (CASE) tool, which provides the ability to abstract complexity and system differences into an easily understandable series of diagrams. Through interoperation of several platforms that are collectively configured, deployed and operated using a common CASE tool, autonomous connected ecosystems (ACE) can be created, i.e. a state where data is connected seamlessly through the convergence of the physical world and its digital realization, with intelligence built-in to all processes from the core system to the edge of the network.

Thus, a system according to the invention may comprise a system of filters that prevent outbound and inbound data transfer depending on a location or a role of the requester or sender of the data. In the context of this application, a filter can be a collection of processes or functions that take any number of inputs and output a subset or derived set of data based on those inputs.

Further, a system according to the invention may provide information-restricted or information-reduced, i.e. "abstracted", versions of the requested data, wherein information that is critical, e. g. in view of the legal frameworks, e. g. due to provisions on data protection, or technology transfer restrictions, is deleted, encrypted or aggregated in the abstracted versions. Aggregating data in this context particularly means replacing a group of observations with a summary statistics based on those observations. For instance, instead of a multitude of values, each being assigned identifiably to a person, device or location, only aggregate data such as a mean value of all values is provided.

A system according to the invention may comprise a decision engine for controlling a distribution of raw data to a plurality of remote data processing units in order to be processed and provided to a requester. The decision engine not only considers technical requirements but also filter settings of the system of filters to decide where to transfer what data to best meet the requirements of the requester. Particularly, the decision engine operates over multiple distributed cooperating nodes all partaking in the decision process.

A first aspect of the invention relates to a computer system for controlling access to digital data, the system comprising a multitude of local systems that are provided at a plurality of remote locations and have a data connection that allows transferring digital data between the local systems.

At least a first subset of the multitude of local systems comprises at least one data acquisition device that is adapted to generate and provide raw digital data. At least a second subset of the multitude of local systems comprises at least one data processing unit having a memory with a memory capacity and a processor with a computing capacity. Each data processing unit is configured to process raw digital data and to generate processed digital data to be presented to one or more of a plurality of users of the system, each user having one of a plurality of roles.

According to this aspect of the invention the system further comprises a filter system comprising a multitude of filters. At least one filter is assigned to each local system, each filter having a filter setting for restricting and prohibiting data transfer between the assigned local system and other local systems, the filter setting considering at least a legal framework applicable at the location of the assigned local system. Particularly, a set of two filters realizing bi-directional - i.e. in- and outbound - filtering capability is assigned to each local system. The computer system, e. g. within the filter layer, is configured to generate one or more abstracted versions of a set of raw or processed digital data, wherein generating an abstracted version comprises deleting, encrypting or aggregating, based on one or more of the filter settings, information from the set of raw or processed digital data.

Considering the legal framework may comprise considering statutory provisions as well as contractual provisions, e. g. obligations restricting the use of data or information derived therefrom.

According to one embodiment, the computer system comprises a distribution engine that is provided, e. g., on a server computer at one or more of the plurality of locations and/or by means of cloud computing. The decision engine is configured, upon receiving a request to present a first set of digital data to a first user, to decide in real time and based at least on the filter settings, at which one or more data processing units raw data is to be processed to generate the first set of digital data that is to be presented to the first user.

According to another embodiment of the computer system, the decision engine is configured to decide at which one or more data processing units the raw data is to be processed to generate the first set of processed digital data also based on the role of the first user, in particular wherein the decision engine is further configured to decide in real time which information is included in the first set of digital data and how the information is presented to the first user, particularly wherein presenting the information comprises generating and presenting at least one diagram.

According to another embodiment of the computer system, for deciding at which data processing unit raw data is to be processed, the decision engine is configured to execute an optimization based on the filter setting of each local system and further takes into consideration at least a subset of a necessary or desirable processing speed, a network latency, a role of the first user, a necessary or desirable detail level of the raw and/or processed digital data, and a utilization of the memory capacities and/or computing capacities of the computing units.

In one embodiment, the decision engine is configured to execute the optimization based on an actual and/or forecasted amount of raw digital data provided by the measuring devices and/or processed digital data requested to be presented.

According to one embodiment of the computer system, the at least one data acquisition device comprises at least one measuring device that is adapted to generate and provide measuring data as raw digital data. Each data processing unit is configured to process the measuring data and to generate processed measuring data to be presented to the one or more users.

According to another embodiment of the computer system, the filter settings are defined considering legal frameworks applicable at a plurality of locations and/or provisions of a contract applicable at least at the location of the assigned local system. Deleting information from the set of raw or processed digital data is then based on the legal frameworks and/or contracts and particularly comprises deleting, encrypting or aggregating - according to the terms of the legal frameworks or contracts - at least one of personal data, information being considered as trade secrets, and information that is subject to technology transfer restrictions. This also applies to technology and its processing being used outside of a certain jurisdiction and to technology export control.

According to another embodiment of the computer system, filter settings are defined for all possible combinations or at least for a subset of possible combinations of user roles and remote locations, for instance for at least four combinations (e. g. for two roles and two locations) or at least twelve combinations (e. g. for three roles and four locations or vice versa). In particular, for each of these combinations filter settings are defined for a present point or period of time and at least one future point or period of time, thereby considering at least a legal framework applicable at the location of the assigned local system at the present point or period of time and the at least one future point or period of time. Such setting may reflect the dynamic changes of the legal framework, e. g. due to new legal provisions entering into force, or due to contractual obligations, such as e. g. confidentiality terms, expiring.

According to another embodiment of the computer system, a first local system of the multitude of local systems comprises a plurality of software agents that are adapted to be used with a plurality of electronic apparatuses that are configured as data acquisition devices, particularly as measuring devices, wherein each software agent is installable on an electronic apparatus of the plurality of electronic apparatuses or installed on a communication module that is adapted to be connected to one of the electronic apparatuses and to exchange data with the apparatus connected to, wherein each software agent is adapted to exchange data with the electronic apparatus it is installed on or connected to.

A second aspect of the invention relates to a server computer as part of a computer system for controlling access to digital data, such as the computer system of the first aspect of the invention. The computer system comprises a multitude of local systems that are provided at a plurality of remote locations and have a data connection that allows transferring digital data between the local systems, wherein at least a first subset of the multitude of local systems comprises at least one data acquisition device that is adapted to generate and provide raw digital data, at least a second subset of the multitude of local systems comprises at least one data processing unit having a memory with a memory capacity and a processor with a computing capacity, and each data processing unit is configured to process raw digital data and to generate processed digital data to be presented to one or more of a plurality of users of the system, each user having one of a plurality of roles. The system comprises a filter system comprising a multitude of filters, wherein at least one filter is assigned at each local system, each filter having a filter setting for restricting and prohibiting data transfer between the assigned local system and other local systems, the filter setting considering at least a legal framework applicable at the location of the assigned local system.

According to this aspect of the invention, the server computer comprises a decision engine that is configured - upon receiving a request to present a first set of digital data to a first user - to decide in real time and based at least on the filter settings, at which one or more data processing units raw data is to be processed to generate the first set of digital data.

A third aspect of the invention relates to a client computer as part of a computer system for controlling access to digital data, such as the computer system of the first aspect of the invention. The system comprises a multitude of local systems that are provided at a plurality of remote locations and have a data connection that allows transferring digital data between the local systems, wherein the client computer is part of a first local system at a first location. At least a first subset of the multitude of local systems comprises at least one data acquisition device that is adapted to generate and provide raw digital data, and at least a second subset of the multitude of local systems comprises at least one data processing unit having a memory with a memory capacity and a processor with a computing capacity, wherein each data processing unit is configured to process raw digital data and to generate processed digital data to be presented to one or more of a plurality of users of the system, each user having one of a plurality of roles.

The first local system comprises at least a first data acquisition device or a first data processing unit, and the client computer is assigned to the first data acquisition device and/or to the first data processing unit of the first local system. According to this aspect of the invention, the client computer comprises a first filter, particularly wherein the first filter is part of a filter system of the computer system comprising a multitude of filters. The first filter has a filter setting for restricting and prohibiting data transfer between the client computer and other local systems, i.e. for restricting and prohibiting transfer of raw digital data generated by the first data acquisition device and/or processed digital data generated by the first data processing unit, respectively, wherein the filter setting is defined considering at least a legal framework applicable at the first location.

The client computer is configured to generate one or more abstracted versions of a set of raw or processed digital data, wherein generating an abstracted version comprises deleting, encrypting and/or aggregating, based on the filter setting, information from the set of raw or processed digital data. Moreover, the client computer is configured to provide, upon receiving a request to transfer a first set of digital data to a second local system and depending on the filter setting, the first set of digital data or an abstracted version of the first set of digital data to the second local system.

According to one embodiment, the client computer is configured, upon receiving the request to transfer the first set of digital data to a second local system, to delete, based on the filter setting, information from the set of raw or processed digital data to generate the abstracted version of the first set of digital data, and to provide the abstracted version to the second local system.

According to another embodiment, the client computer comprises a computing unit, a memory unit and a first communication unit. In a particular embodiment, the first local system comprises a plurality of software agents that are adapted to be used with a plurality of electronic apparatuses that are configured as data acquisition devices, particularly as measuring devices, wherein each software agent is installable on an electronic apparatus of the plurality of electronic apparatuses or installed on a communication module that is adapted to be connected to one of the electronic apparatuses and to exchange data with the apparatus connected to. Each software agent is adapted to exchange data with the electronic apparatus it is installed on or connected to, and the first communication unit and the software agents are configured to exchange data between the electronic apparatuses and the client computer.

The computer system according to the first aspect of the invention of course may comprise one or both of the server computer and client computer of the second and third aspects of the invention.

A fourth aspect of the invention relates to a computer-implemented method for controlling access to digital data using a computer system, such as the computer system according to the first aspect of the invention. The computer system comprises a multitude of local systems that are provided at a plurality of remote locations and have a data connection that allows transferring digital data between the local systems, wherein at least a first subset of the multitude of local systems comprises at least one data acquisition device that is adapted to generate and provide raw digital data, at least a second subset of the multitude of local systems comprises at least one data processing unit having a memory with a memory capacity and a processor with a computing capacity, each data processing unit is configured to process raw digital data and to generate processed digital data to be presented to one or more of a plurality of users of the system, each user having one of a plurality of roles, and the computer system comprises a filter system comprising a multitude of filters, wherein at least one filter is assigned at each local system.

According to this aspect of the invention, the method comprises defining a filter setting for each filter based at least on a legal framework applicable at the location of the local system to which the filter is assigned, the filter setting restricting and/or prohibiting data transfer between the assigned local system and other local systems, and deciding, upon receiving a request to present a first set of digital data to a first user, in real time, by means of a decision engine and based at least on the filter settings, at which one or more data processing units raw data is to be processed to generate the first set of digital data.

According to one embodiment, the method comprises processing, according to the decision, the raw data at the one or more data processing units to generate the first set of digital data, and presenting the first set of digital data to the first user.

According to another embodiment, the method further comprises deciding in real time, by means of the decision engine and based on the role of the first user which information is included in the first set of digital data and how the information is presented to the first user, particularly wherein presenting the information comprises generating and presenting at least one diagram.

According to another embodiment, the method further comprises deciding at which one or more data processing units raw data is to be processed to generate the first set of digital data is also based on the role of the first user.

A fifth aspect of the invention pertains to a computer programme product comprising programme code which is stored on a machine-readable medium, or being embodied by an electromagnetic wave comprising a programme code segment, and having computer-executable instructions for performing, in particular when run on a computer system according to the first aspect of the invention, the method according to the fourth aspect of the invention.

The invention in the following will be described in detail by referring to exemplary embodiments that are accompanied by figures, in which:
- Fig. 1: shows an exemplary embodiment of a local measuring system as a part of a system according to the invention;
- Fig. 2: shows a network diagram of an exemplary system to be presented to user of the system;
- Figs. 3a-c: show a data flow diagram of an exemplary system to be presented to user of the system;
- Fig. 4: shows a first exemplary embodiment of a system according to the invention, illustrating data flow between multiple layers and local systems;
- Fig. 5: shows a second exemplary embodiment of a system according to the invention, illustrating general elements of an approach for structuring distributed digital services according to the invention;
- Fig. 6: illustrate filter settings of an exemplary filter of the system;
- Fig. 7: shows a third exemplary embodiment of a system according to the invention, illustrating options for a decision where to process raw data in order to provide the processed data to a user; and
- Fig. 8: illustrates an intelligent information platform used together with a system according to the invention.

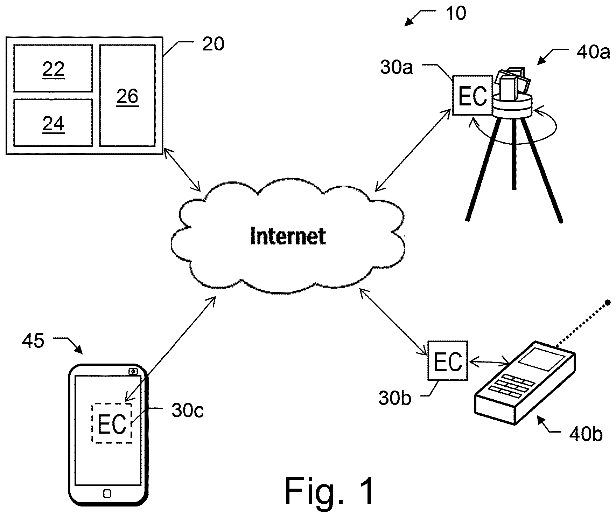

Figure 1 illustrates an exemplary embodiment of a local system 10 that is embodied as a local measuring system and can be connected to and used with a digital services distribution system according to the invention. The shown system 10 comprises a computing device 20 and three software agents 30a-c (EC), wherein two agents are provided in agent modules 30a-b, each of which being connected to surveying devices 40a-b, and one software agent 30c is installed directly on a user device 45, e. g. as a mobile device application ("app").

Although the depicted devices 40a-b in these examples are adapted as surveying devices, the agents can also be provided in or at other kind of devices. These can be actuating devices like machine tools, industrial machines, manufacturing robots or construction machinery. Also other kinds of measuring devices than the depicted ones can be used, e. g. reality capture devices, laser trackers or total stations. Also unmanned aerial or ground vehicles (UAV/UGV) comprising surveying or other measuring equipment can be used, e. g. surveying drones or inspection robots.

The modules 30a-b with the agents installed thereon are connected to external devices 40a-b and adapted to exchange data with the respective connected device. For instance, such a connection might include using a universal serial bus (USB) or other hardware interface or a wireless data connection such as Bluetooth.

In the shown example, the devices comprise a laser scanning device 40a, a hand-held laser distance meter 40b, and a portable electronic device 45 that is assigned to a certain user. For instance, the portable device 45 can be a smartphone or tablet PC or a wearable such as a smart watch. As device 45 is adapted to allow installing external software or deploying a set of microservices, the respective agent 30c can be provided as a software application directly in the external device 45 instead of being provided in a module that is connectable to the device 45. It is also possible to provide the software by app delivery, e. g. by means of a mobile app that can be used for a certain workflow only or for a multitude of different workflows.

The computing device 20 comprises a computing unit 22 having a processor, a memory unit 24 adapted for storing data, and a communication unit 26 (e. g. comprising a modem) allowing data interchange with the agents 30a-c.

Alternatively, the computing device 20 can be embodied by a plurality of devices, with a user device operated by a user and further devices for performing the computing. Also, the application may run in a cloud. The computing device 20 may optionally also be embodied by a cloud or a plurality of devices.

As shown, the computing device 20 can be connected via the Internet with the remote agent modules 30a-b and the portable device 45 comprising the third agent 30c. This is especially useful, if a direct data transfer is not possible because the devices are positioned at a larger distance from each other, e. g. more than a hundred meters away, or if, for instance, a workflow comprises capturing data of a skyscraper with multiple measuring devices positioned in several stories of the building.

Alternatively, the computing device 20 and the agents 30a-c can be grouped locally together and connected with each other, for instance wirelessly, e. g. by means of a wireless local area network (WLAN) or by means of mesh networks such as LoRa (Long Range Wide Area Network) or ZigBee or Bluetooth. Also, some devices or modules may be connected via Internet and others connected locally to the computing device 20. Also, devices or modules can have both local and cloud connections.

The computing device 20 can be a user device such as a personal computer that is operated by a user and comprises input means such as keyboard and mouse for entering or selecting a task to be performed by the devices 40a-b, 45. Alternatively, especially in case of the second embodiment, the computing device 20 can be another portable device (such as the user device 45).

The system may optionally also provide a functionality to orchestrate new functionalities for the devices 40a-c. These new functionalities may comprise e. g. algorithms, fog analytics, control system strategies or safety & security features. This is possible e. g. through a combination of publishing of device information and reflection (= "self-description") of the devices' capabilities. The integration of all this information allows the orchestration of algorithms, analytics, etc. with the deployment of new workflows to specific systems. The system can play the role of the orchestrator of many systems with its ability to deploy workflows to other systems. Depending on the situation, one of the agents can also take the role of an orchestrator to manage other agents.

Also virtual devices can be formed that have capabilities of different devices merged. Devices can learn to understand, group and tailor device functionalities. Other devices can be mimicked. For instance, a total station, such as e. g. the Leica Nova MS60, could mimic the functions of a laser scanner, a handheld distance meter or even a plumb.

A multitude of local systems 10 like the one described in Figure 1 can be connected by a system according to the invention.

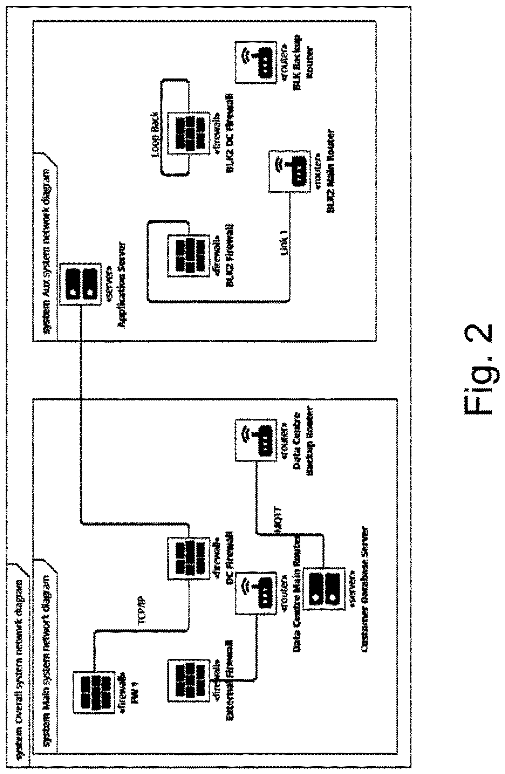

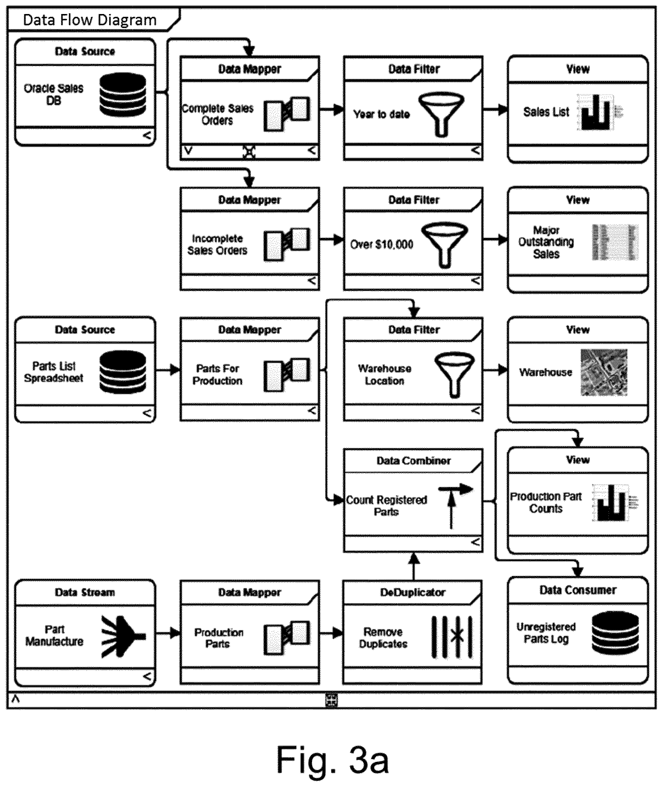

In Figures 2 and 3a-c exemplary diagrams generated by an exemplary digital services distribution system are shown. In some embodiments, a digital services distribution system according to the invention may be configured, deployed and operated using a Computer Aided System Engineering (CASE) tool, which provides the ability to abstract complexity and system differences into an easily understandable series of diagrams. The Figures 2 and 3a-c show examples of such diagrams. Through interoperation of several platforms that are collectively configured, deployed and operated using a common CASE tool, autonomous connected ecosystems (ACE) can be created, i.e. a state where data is connected seamlessly through the convergence of the physical world and its digital realization, with intelligence built-in to all processes from the core system to the edge of the network.

Each diagram provides a view of the same system from a different perspective, some aimed at system experts, some at domain experts, some at management and some at those responsible for operating and maintaining the system. By providing different views of the same system, people from different disciplines can collaborate and agree at the conceptualization, design, implementation and production stages of a project without having to understand each other's disciplines in detail and with the ability to focus on their responsibilities within that system.

The diagrams are organized in a nested hierarchical manner so that users may navigate from contextual levels of detail down to very detailed levels by expanding diagram symbols to reveal the underlying complexity. This allows users to expose the amount of detail that enables them to do their job without being overwhelmed by the entire system in one go. It also allows them to navigate to detailed parts of the system without losing track of their position in the larger context.

Each system may have a context diagram that describes how the underlying subsystems are connected at a logical level. It provides all users with a high-level overview of the system under consideration. When representing a running system, this diagram shows the current operational state of the whole system.

When considering the system in terms of deployed software and hardware, a deployment diagram is used. This diagram shows where software is deployed, the modules the software is made from and the distribution of those modules between devices.

It also shows connections between systems where those connections are relevant to the deployed system. When deploying a system, this diagram shows the current state of deployment including versions, module use, successful and unsuccessful installations and failure conditions. This enables monitoring and remediation during deployment and upgrade activities for both the entire system and parts of subsystems depending on the activity currently being undertaken.

Figure 2 is a network diagram showing an exemplary system in terms of connectivity, the physical hardware and its location. It also shows devices that are present in the system but are only of interest from a communications and network security perspective. During operation and deployment, this diagram shows the network and hardware state in real time.

Figures 3a-c show a data flow diagram of an exemplary system. The data flow diagram of Figure 3a is used by people with domain or business expertise, i.e. the people who will gain value from the system and understand the functionality required without necessarily understanding the underlying technology or connectivity. It represents the system as a series of data end-points and transformations, showing the movement, combination, separation and enrichment of data between two or more points in the system. These could be a back-end big-data source, a real-time edge data stream, a shared file store, a user application screen, a dashboard, an archive repository, a log file, or other data source or data target. The complexities of accessing the data or transforming it are hidden from the user and presented in the same form regardless of the actual technology, structure or method of implementation.

When representing a running system, actual data flows and transformations can be monitored as they happen. This is useful during development, testing and production in that it exposes the hitherto inaccessible flow of data in real-time. This would previously be deduced by the very arduous task of creating specific source test data and then looking at the resultant target data with log files being used to find data, timing and misconfiguration errors along the way. This process is completely automated in the system with the data flows being extracted from the data source, log files and data target in a transparent manner, which is then presented on the same data flow diagrams. This facility enables extremely fast and efficient development, testing and monitoring of systems and allows for a much more agile approach to system integration and interoperability.

As can be seen in the example of Figure 3a, a data mapper and filter is used on three completely different data sources, two different data sources are combined to form one combined view and valid data is separated from erroneous data. All data targets are treated in the same manner whether they are mobile App views, BI dashboards or database/log files, i.e. the underlying complexity has been obscured into a common set of operations understood by the user. The filter may be a collection of processes and functions that output a subset of data or a derived set of data based on provided inputs.

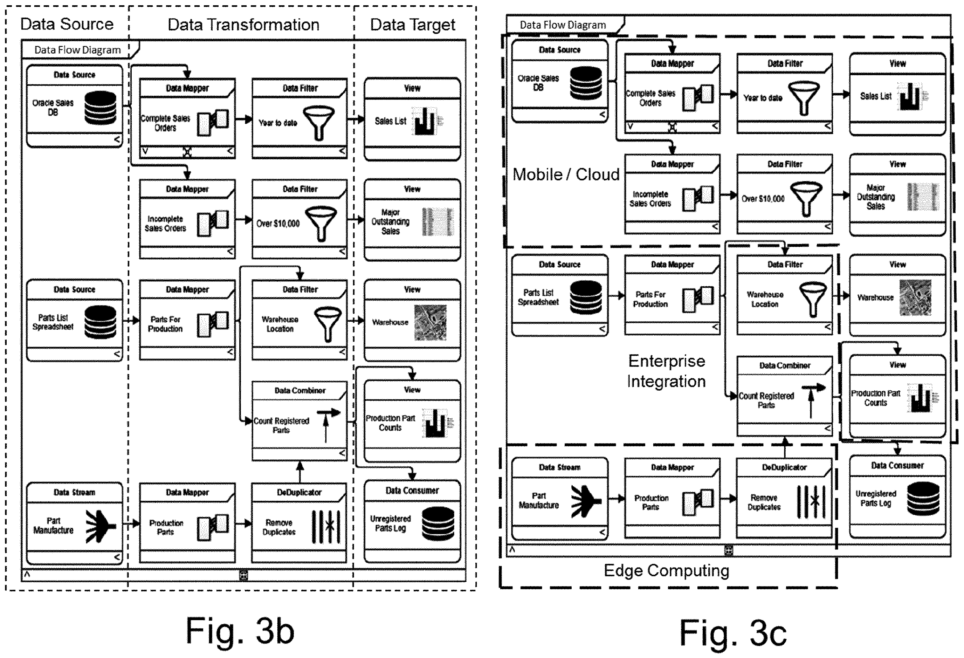

The data flow diagram of Figure 3b has been annotated to identify the data source, transformation and target components, and the data flow diagram of Figure 3c has been annotated to show the underlying sub-systems (Mobile/Cloud, Enterprise Integration, and Edge Computing). These underlying details are unnecessary for the target user and are shown here as an example of the simplification process used in the exemplary system of Figure 3a to allow different user groups to configure systems while focusing on their area of expertise.

The system's configuration and operation is managed at many different user levels, both in expertise and operational focus. To support this, each diagram, the underlying data and the system capabilities are rigorously and securely managed at a fine granularity for each user and user group. For example, a dashboard user may be able to view various preconfigured dashboards, but will not be able to configure new ones, similarly, a user from one organisation will not be able to view the data or configuration of another organisation.

In read-only mode, the user is able to see the configured systems that are accessible by them and look at the configuration and operation of the underlying system. This allows for collaboration, agreement, monitoring and debugging of a system at all stages of development and operation. It does not allow for the direct modification of the underlying system, its configuration or its operational state.

An edit mode is used to create, operate and maintain systems and subsystems. A user's security and access privilege level determines the availability of edit facilities, which underlying subsystems are available for edit and in what manner.

A deployment mode allows for the deployment, installation, setup, configuration and maintenance of the running sub-systems. Deployment in this sense is everything from remotely installing an operating system, to installing and configuring applications and data, managing data migrations, to monitoring the successful deployment and managing the deployed versions of software throughout the system. The deployment mechanism enforces system idempotency i.e. each configured system remains in a known, consistent state regardless of the number of times and order that the various dependencies are installed or configured.

In addition to managing the technical deployment and configuration of software, the system can be used to enforce data, IP and tax governance within organisations and geographies. Enforcing, reporting and monitoring both legal and company policies in this regard. The system "knows" where software elements are deployed, how and by whom they are used and what data is moved between each of them. The system can therefore ensure that no data policies relating to the transmission and retention of data are violated, that data usage is recorded and that transmission limits are applied appropriately. The system can also ensure that IP rules and licenses are applied correctly and that the distribution of IP can be monitored for the application of international tax rules. This mechanism can also be used for the identification and distribution of funds, where multiple business units pay for or supply the system as a service.

Once deployed, and in particular during initial or subsequent deployments, system monitoring is vital for the early identification of unforeseen problems related to machine, process, data loads and patterns. This is particularly important when multiple different types of systems are integrated as these systems may be exposed to patterns, loads and frequencies of data that are outside their normal operating conditions. Being able to monitor bottlenecks, heavy loads, and general anomalies allows for the identification of usage patterns and the early remedial action. This rollout experience leads to trouble free adoption and ready acceptance of a new and updated systems by end users.

During the development and operation of a complex system, it is imperative to be able to test scenarios and monitor usage. Being able to observe changes as they happen and see the effect of those changes throughout the system is key to this. Above and beyond the monitoring capability, the system has the ability to "slow" the passage of data through the system, to control its progress between the various stages of transformation and to alter the actions performed based on that data at each stage of the flow. This greatly improves the speed with which a new facility can be implemented and significantly reduces the time needed to find and fix problems as they arise.

One of the key tenants is to unify and liberate siloed software and systems for broader adoption, to enable the safe introduction of new technologies into trusted systems and to provide a platform that is open to software and systems of several different suppliers. All this while meeting the needs of all the interested parties from Development, IT, Support and Maintenance. This is achieved by sharing previous implementation details and best practice in the form of libraries and diagram snippets. These form a collective resource that can be utilized through cut and paste between diagrams to implement new systems based on previous experience and expertise. A common library that is used as a repository of tried and tested system integration patterns and components by all users of the system.

As each subsystem of the system presents itself in a common format to the user, there is a certain amount of orchestration that goes on below-the-surface to map this common paradigm to the underlying data flows and models of that subsystem. This, and the common presentation (diagrams) is the responsibility of a "toolbox" subsystem. This toolbox consists of the functions and mechanisms to map between the CASE tool and the subsystem and a series of pictorial representations to present that data in a common format. Each toolbox is owned by the subsystem development group so that subsystem changes and improvements remain synchronised with the tool. Each toolbox is plugged into the CASE tool to allow for configuration of that subsystem and inclusion and cooperation with the other subsystems. There is a special system tool box that understands the relationships between subsystems that are beyond the scope of any one subsystem. The system toolbox is maintained by the CASE tool development group along with the interface definitions for the other toolboxes. New toolboxes can be added to the CASE tool, thereby integrating new functionality and allowing the easy adoption of new functionality across all user groups and systems.

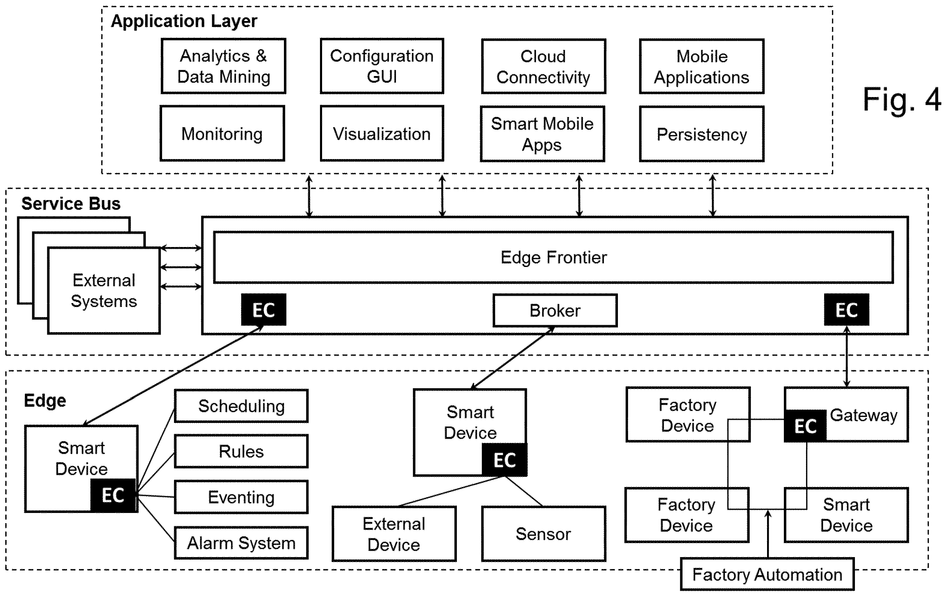

Figure 4 illustrates data flow between multiple layers and local systems in an exemplary Digital Services Distribution System. An enterprise service bus implements a communication system between mutually interacting software applications in a service-oriented architecture. As it implements a distributed computing architecture, it implements a special variant of the more general client-server model, wherein, in general, any application using the service bus can behave as server or client in turns. The service bus promotes agility and flexibility with regard to high-level protocol communication between applications. The primary goal of the high-level protocol communication is enterprise application integration of heterogeneous and complex service or application landscapes. In the illustrated system, the service bus is run using "Edge Frontier" (EF) technology, connecting with a multitude of local systems at the "Edge". The term "edge" refers to the geographic distribution of computing nodes in the network, e. g. as Internet of Things (IoT) devices. In this example, each of the local systems comprises at least one device that is equipped with an "Edge Client" (EC) software agent (described above with respect to Figure 1), providing data transfer with the EF service bus.

For distributed digital services like smart convergence platforms or smart/modular analytics, the legal situation may become more complex in view of privacy and data protection. In this context, the localisation of services becomes important issue. Due to the globally distributed services, e. g. by moving processes to the cloud which in turn means delocalisation, a plurality of jurisdictions might be potentially affected and various legal provisions may apply. For example, by using "EdgeClient" (EC) and "EdgeFrontier" (EF) as shown in Figure 4, data may be generated in a certain jurisdiction and subsequently transferred to another jurisdiction where data processing is performed and new data and information are generated. In turn, data and information will be sent back to the EC where the process originated. Furthermore, the particular EC may be provided with specific functions and capabilities via EF. The flow of data and software modules or libraries may occur across national borders and may be difficult to follow or even control.

However, in view of legal implications, a localization appears to be necessary or compulsory if applicable law has to be determined, e. g. in case of infringement of third parties' rights. This similarly affects many industries and fields of technology. Consequently, not only providers of internet based services but also conventional industry need to deal with these challenges. Similar considerations may be relevant for manufacturing intelligence with integration of measuring directly into the manufacturing lines. The data generated by sensors is stored, processed, analysed and the derived results or aggregates transmitted back to the initial customer or to other users. The structure may also use several layers of data handling which will be locally separated and which may also be located in different jurisdictions.

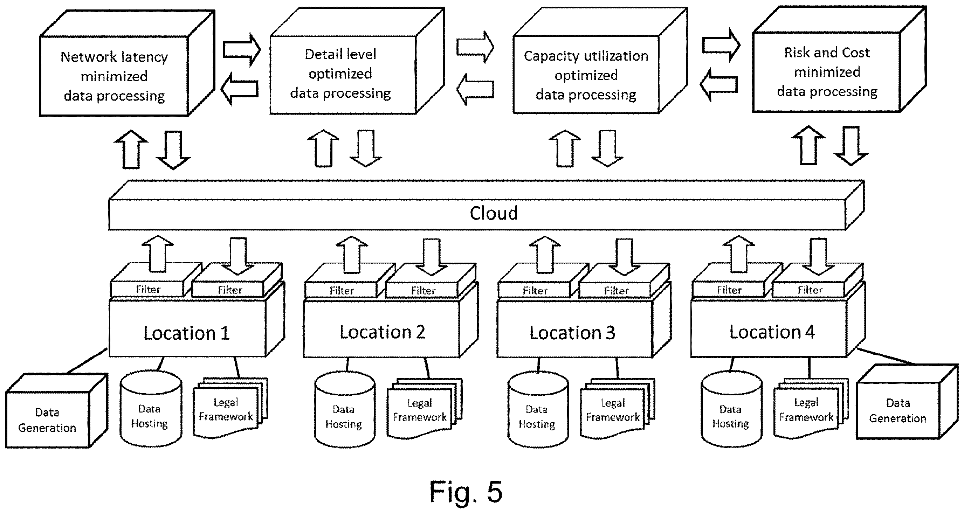

Figure 5 illustrates an exemplary system with delocalized data storage and processing. A local element and a delocalized, cloud based element are used. The critical decision is how to select data and functions which are stored or provided locally and which are moved to another layer for being stored and processed elsewhere.

In general, such layered and delocalized structures may lead to distributed services which can cover far more jurisdictions than conventional software solutions which are executed more or less in a single or at least a very limited number of jurisdictions. For providers of distributed digital services, the legal implications might become even more important in the future.

On the one hand, technical reasons which may lead to a certain localization of data processing have to be considered, for instance on-board processing or local hosting to decrease response times, which is important e. g. for autonomous driving. The available capacity at each hosting location and its optimal utilization is a key factor. A necessary detail level of processing or an importance to provide data processed at a certain detail level have to be considered. The question of where to process data can already be subject to an optimization that is purely based on these questions. However, it is not possible to base the consideration purely on these questions, if several different jurisdictions are involved.

Then, aside from the purely technical reasons, also legal implications issues need to be considered, such as minimization of legal exposure and risk and maximization of return by reducing cost, particularly tax. For distributed digital services at least the following legal implications or considerations are relevant:
- ownership of data (e. g. database protection, contractual issues, unfair competition),
- restrictions of use (e. g. data protection and privacy),
- export/import restrictions,
- data protection standards,
- technology export,
- sanctions,
- liability issues and
- taxation issues.

Once data are generated or collected, it remains an issue whether or to what extent these data can be used by the owner of the generating or collecting system (e. g. a local measuring system of Figure 1) within the jurisdiction of origin or in other jurisdictions.

Many restrictions may apply. For instance, regarding the ownership of the collected or generated, this is currently discussed in a wider context, e. g. in view of a future harmonized property law within the EU. Nevertheless, current restrictions to using data based on ownership in the widest sense can be based on several mechanisms, e. g. contractual regulations, unfair competition or database protection.

For a data collector it is important to ensure that generated data are collected in a controlled manner which creates database rights for specified entities. Otherwise, use of data owned by other parties would have to be considered in a contractual framework. Moreover, data protection and privacy standards limit the use of data as long as the data could be linked to a particular person. Whereas these two points would also be relevant for a use of data within a particular jurisdiction, further restrictions may apply with view to export of data or corresponding information. Again, this could be caused by data protection or privacy provisions but also by technology export limitations or embargos.

Providing goods and services generally implies warranty and liability issues. However, for distributed digital services further more specific risks may emerge, e. g. if in the course of data processing a jurisdiction would be involved unintentionally, so that third parties' rights in this jurisdiction are violated.

Another issue is ex delicto liability which may occur even without intention or knowledge. Particularly in the field of intellectual property and computer-implemented inventions, it may happen that a distributed process may create an effect in a jurisdiction with patent protection for the technology used. Therefore, the setup of data processing infrastructure and the assignment of processes to particular countries have to be considered under potential ex delicto liability, e. g. it has to be considered whether third parties' rights could be violated.

Also the taxation of internet based services is an important issue. If general principles are followed, taxation should reflect place and amount of value created. However, in the current environment, for many international corporations, taxation only arises if the corresponding business has a physical presence in a particular jurisdiction. However, one feature of distributed digital services is that they can be provided with minimal physical presence right from the start, even in the country of residence. It is for that reason that cross-border activities of digitalised businesses are seen as falling into the gaps of international tax rules and remaining untaxed in most jurisdictions where the business is digitally present and creating value. A physical localization of data processing and corresponding value creation may have tax implications. Without proper assignment of services to a particular jurisdiction the risk of multiple taxation may increase, potentially preventing a break-even when offering these services service.

It is suggested that the above mentioned developments and conditions have some impact on the design of how to provide digital products and services. Whereas the conventional distributions of hard- and software products may be less affected, the field of distributed digital services is particularly critical.

Preferably, all data generation, collection and hosting for a local customer should be kept within a single jurisdiction to avoid legal or taxation pitfalls. The technical setup is accompanied by a framework of legal documents specifically addressing all local provisions and minimizing risk to the extent possible under the particular jurisdiction.

In order to satisfy restrictions on data/technology import and export, outbound and inbound filters are implemented for each environment. By using suitable filters, it is possible to enable a free flow of data and information in a neutral sphere where the allocation of processing could be organized also according to risk minimization and tax optimization considerations.

Figure 5 illustrates general elements of such approach for structuring distributed digital services. At four locations with different legal frameworks data is hosted. At some of these locations data is also generated or otherwise collected, e. g. generated by means of a local measuring systems as shown in Figure 1. The data may be stored and processed either at the same location, at one or more other locations or both. This decision can be subject to an optimization for each set of data. The optimization may take into consideration a minimization of network latency, an optimization of a required detail level, an overall optimization of the utilization of the data processing and storage capacities and also a minimization of legal risk and also effects of taxation. Filters are installed at each location that decide based on legal frameworks whether a certain set of data may or may not be transferred from the location to a certain other location or vice versa. Such bi-directional filters using in- and outbound filtering functionality allow enabling location-dependent access to data and algorithms. In many constellations, in- and outbound filters will be required. However, there may be technologies and jurisdictions which allow implementation with only one direction of filtering.

As the technically best location for processing a certain set of data may be excluded by legal or contractual regulations for this very set of data, the filter settings have to be considered within the optimization. If more than one location is allowable in view of the legal framework and equally (or similarly) suitable for processing the data, the question of taxation can be considered in order to avoid multiple taxation.

In many cases it is possible to adapt the data sets in view of the legal framework to allow transfer. This adapting of the data may comprise applying an abstraction level to the data, i.e. deleting certain information, e. g. by means of anonymizing personal data, through format preserving cryptography, or by censoring critical information. Depending on the structure, content and origin of a certain data set, a number of possible abstraction levels may be available. Also, the system may be configured to perform the abstraction automatically or give instructions for a user which information needs to be deleted to create an abstracted version of a set of data at a certain abstraction level. The available abstracted versions of a data set have to be considered within the optimization. For instance, if personal data in a data set would need to be deleted for processing the data set abroad, the optimization might need to determine whether processing the data set with the personal data would be crucial, desirable or expendable.

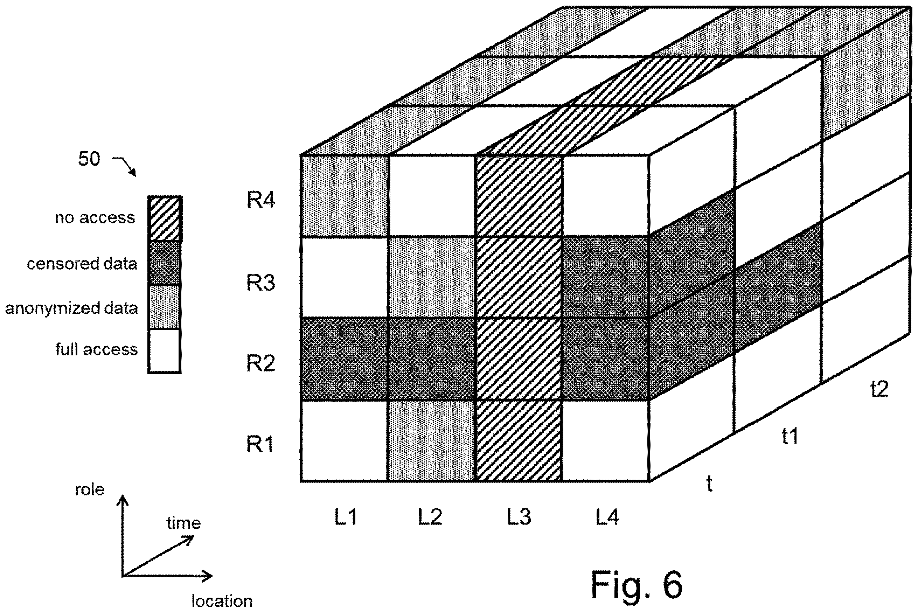

Figure 6 illustrates filter settings 30 by means of a 3D matrix. In the given example, an outbound filter has four different filter settings 30 for allowing data at certain abstraction levels to be accessed by certain user roles (R1-R4) at certain locations (L1-L4) at a certain point of time (t, t1, t2). The filter settings include "full access", i.e. no abstraction being applied, and the two abstraction levels "anonymized data" and "censored data" where certain kinds of data are deleted from the provided data set. For instance, in "anonymized data" all personal data might be deleted, and in "censored data", e. g. additionally, certain critical information such as values concerning trade secrets or critical technology might be deleted.

The fourth filter setting "no access" means that the data itself cannot be accessed by that user at that location and time. However, information may be provided that certain data exists, why it cannot be accessed and when or by whom it can be accessed.

Whereas t might refer to the present, t1 and t2 refer to points or periods in the future. For instance, after a patent application for a certain measuring method will have been published at point t2, its disclosure will no longer be a trade secret so that it is no longer necessary to censor data sets generated by said method for user group R2.

L3 in this example might be a location in a different jurisdiction on which a ban for technology transfer has been imposed. Thus, at present, none of the user groups R1, R2, R3 and R4 at that location has access to the data set. It is already known that said ban expires at point t2. So after that date, anonymized data can be accessed from L3. Another example pertains to contractual non-disclosure agreements that apply for a certain period of time or until a fixed date.

Of course, the used matrix can also have more than three dimensions. Optionally, the matrix or another visualization of the data comprised by the matrix may be provided to a requester of a set of data for information purposes, in particular if access to the data has been denied or restricted to an abstracted version. A similar matrix might also be used for a data management of the system.

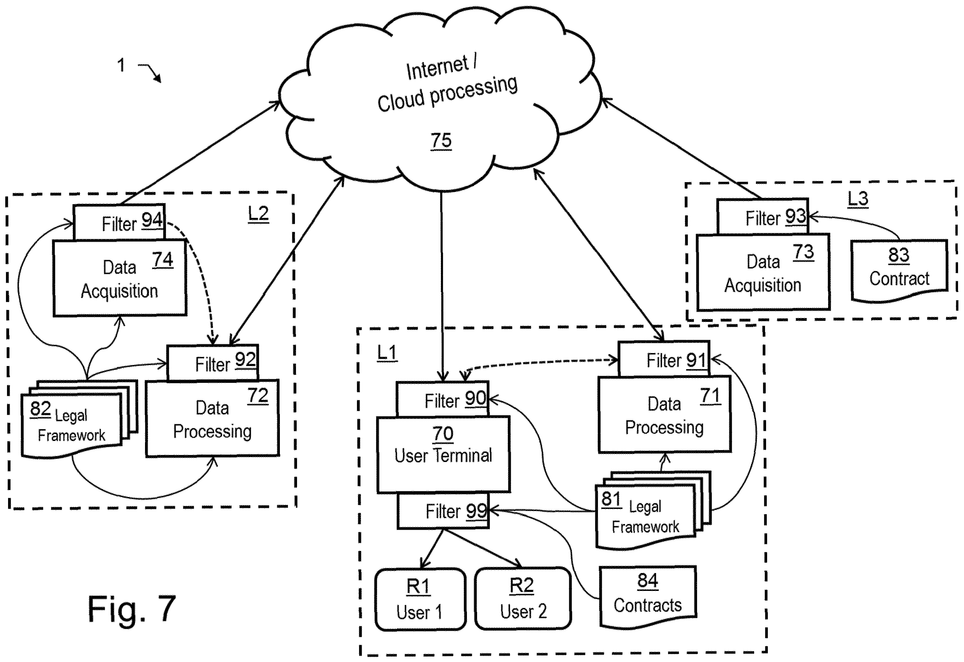

Figure 7 shows an exemplary embodiment of a system 1 according to the invention, illustrating controlling the access of data. A user terminal 70 is situated at a first location L1, at which users having different roles R1, R2 can access data that has been acquired and/or processed remotely. Data is acquired at data acquisition units 73, 74 that are situated at a second location L2 and a third location L3. Data, including the data acquired at data acquisition units 73 and 74, can be processed at the data processing units 71, 72 situated at the first location L1 and the second location L2, or delocalized by means of cloud processing 75. All locations L1, L2 and L3 are in different jurisdictions (e. g. in different countries).

The user terminal 70 and the data processing and acquisition units 71-74 are connected with each other by means of a data connection, e. g. by the Internet and/or by the Service Bus of Figure 4, optionally comprising software agents (EC) as described in Figure 1 or Figure 4.

Filters 90, 91, 92, 93, 94 are assigned to the user terminal 70 and to each data processing and acquisition unit 71, 72, 73, 74 to control data traffic via the data connection. The user terminal 70 may further comprise an internal filter 99 to control data access for users according to their role R1, R2. Each filter has individual settings according to legal frameworks 81, 82 at the respective jurisdiction and according to contracts 83, 84 applying to the respective data.

For instance, a first user having a first role R1 wants to compare data acquired by the first and second data acquisition units 73, 74, wherefore data from both units needs to be processed. The data may be that of two production sites producing the same product for different countries, and the user's role R1 may be that of a quality assurance manager. The raw data acquired at the production sites by the data acquisition units 73, 74 may comprise measurement data of produced parts, statistical data concerning a production situation and personal information, e. g. concerning employees involved in the production of a part.

At location L3, a contract 83 with a contractor prohibits some of the generated data to leave the facility and further limits access of measured values to a defined number of users. Upon the request of the user at location L1, the filter 93 will therefore allow access only to a version of the data set that has a first abstraction level. This version may then be uploaded to the Internet for processing elsewhere, as there is no processing unit at L3.

At location L2, the legal framework 82 prohibits exporting unprocessed data comprising personal information. Also, there are specific regulations regarding data acquisition and processing that differ from regulations elsewhere, i.e. from the legal framework 81 at location L1.

Thus, it has to be considered whether it is preferable to process the data of the data acquisition unit 74 at the data processing unit 72 of L2 or to export the data with a second abstraction level. Also, it has to be considered where to process the data of the data acquisition unit 73.

The internal filter 99 of the user terminal 70 may prevent certain data to be provided to a user of the terminal based on the user's role R1, R2. The internal filter 99 has filter settings that consider a legal framework 81 at the location L1 of the terminal 70 and contracts 84 that apply to the provided data. For instance, such a contract might be a non-disclosure agreement that restricts full access to some data to users having a first role R1 and allows users having a second role R2 to access only an abstracted version with certain information being deleted. This abstracted version may be generated directly at the user terminal 70.

The system may comprise a decision engine, e. g. running on the user terminal 70 or in the cloud 75, wherein the engine is configured to execute an optimization of the processing of the data. The optimization comprises a selection at which processing unit 72, 73 (or cloud 75) the data is processed. The optimization may be based on an actual or forecasted amount of data to be processed. It takes all the filter settings of the filters 90-94 into consideration and further considers a necessary or desirable processing speed, a network latency, a necessary or desirable detail level of the processed data and the available processing capacities.

Depending on the requirements of the user, or his or her role R1, R2, i.e. what data needs to be presented and may be presented, the decision engine determines, based on all filter settings, where the data from the two data acquisition units 73, 74 can be processed. The resulting options are considered in an optimization process, in which a number of technical instances are weighted for all of the possible options. If there are limitations for an option that are acceptable but not desirable, these limitations are also considered in the weighting.

A result of the weighting might then, for instance, lead to the decision to have all data be processed at the data processing unit 72 at the second location L2, wherein the raw data from the second data acquisition unit 74 is transferred directly to said data processing unit 72 (dashed arrow) to avoid abstraction of the raw data that would become necessary if the raw data would be transferred via the Internet using servers outside location L2.

A filter 90-94 may be part of a computer that is assigned to a data acquisition device 73, 74 or to a data processing unit 71, 72. The computer and the assigned device can be part of the same local system, which may be configured as the system shown in Figure 1. The filter on the computer has a filter setting for restricting and prohibiting data transfer between the computer or its assigned device and other devices or local systems. The filter setting is defined based on the legal framework 81, 82 applicable at the computer's location and configured to restrict or completely prohibit outbound transfer of data. In some cases, this may allow the viewing and modification of data, but not of a local storage.

The computer may be further configured to generate one or more abstracted versions of a set of raw or processed digital data generated by the assigned device or even other devices at the same location or other locations (e. g. if these devices are not assigned to a computer of their own). Generating an abstracted version generally comprises prohibiting, based on the filter setting, access to critical information that was included in the set of raw or processed digital data. This may comprise deleting or encrypting the critical data or aggregating the critical data.

When the computer receives a request to transfer a first set of digital data to a second local system, for instance a request from the decision engine, the computer provides depending on the filter setting, either the first set of digital data or, if the filter settings would prevent this, an abstracted version thereof to the second local system. The computer may be adapted to automatically generate the abstracted versions according to the legal framework if a set of data is generated. Alternatively, the computer may be adapted to generate the abstracted version only when necessary, i.e. upon receiving a request to transfer data, and after the filter determines that only the abstracted version can be transferred. In particular, this computer can be adapted as the computing device 20 of Figure 1, having a computing unit, a memory unit and a first communication unit, communicating with one or more electronic apparatuses that are configured as data acquisition devices or data processing units via the software modules.

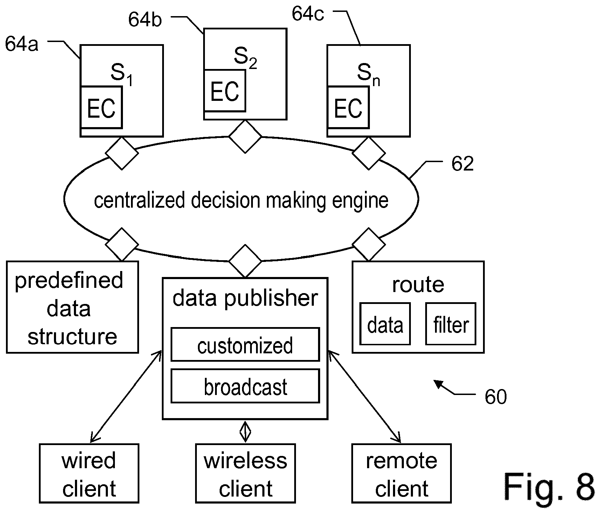

Figure 8 illustrates an intelligent information platform that can be used together with a system according to the invention and in some embodiments forms a part of the system according to the invention. In general, such a platform is described e. g. in the document EP 3 156 898 A1. The intelligent information platform provides a fully configurable distributed ERP-like (ERP = enterprise resource plan) information processing platform 60 that routes the information, based on certain rules and policies to a centralized decision engine 62.

Although the invention is illustrated above, partly with reference to some preferred embodiments, it must be understood that numerous modifications and combinations of different features of the embodiments can be made.

The scope of the invention is defined by the appended claims.

## Claims

1. Computer system (1) for controlling access to digital data and algorithms, the system comprising a multitude of local systems that are provided at a plurality of remote locations (L1-L4) and have a data connection that allows transferring digital data between the local systems, wherein
- at least a first subset of the multitude of local systems comprises at least one data acquisition device (73, 74) that is adapted to generate and provide raw digital data, the at least one data acquisition device (73, 74) comprising at least one measuring device that is adapted to generate and provide measuring data as raw digital data;
- at least a second subset of the multitude of local systems comprises at least one data processing unit (71, 72) having a memory with a memory capacity and a processor with a computing capacity; and
- each data processing unit (71, 72) is configured to process the raw digital data including the measuring data and to generate processed digital data including processed measuring data to be presented to one or more of a plurality of users of the system (1), each user having one of a plurality of roles (R1-R4),
**characterized in that**
the system (1) further comprises a decision engine and a filter system comprising a multitude of filters (90-94), wherein
- at least one filter (90-94) is assigned at each local system, particularly a set of two filters implementing bi-directional in- and outbound filtering capability, each filter having a filter setting (50) for restricting and prohibiting data transfer between the assigned local system and other local systems, the filter setting considering at least a legal framework (81, 82) applicable at the location of the assigned local system, wherein filter settings (50) are defined for at least a subset of possible combinations of roles (R1-R4) and remote locations (L1-L4), the subset comprising at least four combinations;
- the computer system is configured to generate one or more abstracted versions of a set of raw or processed digital data, wherein generating the one or more abstracted versions comprises deleting, encrypting and/or aggregating, based on one or more of the filter settings (50), information of the set of raw or processed digital data; and
- the decision engine is configured, upon receiving a request to present a first set of digital data to a first user, to decide in real time and based at least on the filter settings (50) and on the role (R1-R4) of the first user, at which one or more data processing units (71, 72) raw data is to be processed to generate the first set of digital data,
wherein, for deciding at which data processing unit (71, 72) the raw data is to be processed, the decision engine is configured to execute an optimization based on the filter setting (50) of each local system and further takes into consideration at least a subset of
- a necessary or desirable processing speed,
- a network latency,
- a necessary or desirable detail level of the raw and/or processed digital data, and
- a utilization of the memory capacities and/or computing capacities of the computing units.

2. Computer system (1) according to claim 1,
**characterized in that**
the decision engine is provided on a server computer at one or more of the plurality of locations (L1-L4) and/or by means of cloud computing.

3. Computer system (1) according to claim 1 or claim 2,
**characterized in that**
the decision engine is further configured to decide in real time which information is included in the first set of digital data and how the information is presented to the first user, particularly wherein presenting the information comprises generating and presenting at least one diagram.

4. Computer system (1) according to any one of the preceding claims,
**characterized in that**
the decision engine is configured to execute the optimization based on an actual and/or forecasted amount of
- raw digital data provided by the measuring devices and/or
- processed digital data requested to be presented.

5. Computer system (1) according to any one of the preceding claims,
**characterized in that**
the filter settings (50) consider
- legal frameworks (81, 82) applicable at a plurality of locations (L1-L4) and/or
- provisions of a contract (83, 84) applicable at least at the location of the assigned local system,
wherein deleting information from the set of raw or processed digital data is based on the legal frameworks (81, 82) and/or contracts (83, 84).

6. Computer system (1) according to claim 5,
**characterized in that**
deleting information from the set of raw or processed digital data comprises deleting
- personal data,
- information being considered as trade secrets, and/or
- information subject to technology transfer restrictions or export control.

7. Computer system (1) according to any one of the preceding claims,
**characterized in that**
for each of the combinations filter settings (50) are defined for a present point or period of time (t) and at least one future point or period of time (t1, t2), considering a legal framework (81, 82) applicable at the location of the assigned local system at the present point or period of time (t) and at least one future point or period of time (t1, t2).

8. Computer system (1) according to any one of the preceding claims,
**characterized in that**
a first local system (10) of the multitude of local systems comprises a plurality of software agents (30a-d) that are adapted to be used with a plurality of electronic apparatuses (40a-d) that are configured as data acquisition devices (73, 74), particularly as measuring devices, wherein each software agent (30a-d) is
- installable on an electronic apparatus (40a-d) of the plurality of electronic apparatuses (40a-d) or
- installed on a communication module that is adapted to be connected to one of the electronic apparatuses (40a-d) and to exchange data with the apparatus (40a-d) connected to,
wherein each software agent (30a-d) is adapted to exchange data with the electronic apparatus (40a-d) it is installed on or connected to.

9. Computer system (1) accorrding to one of claims 1 to 8 comprising a server computer wherein the server computer comprises the decision engine.

10. computer system (1) according to one of claims 1 to 8 comprising a client computer, wherein the client computer is part of a first local system (10) at a first location, wherein the first local system comprises at least a first measuring device or a first data processing unit (71, 72) and the client computer is assigned to the first data acquisition device (73, 74) and/or to the first data processing unit (71, 72) of the first local system, **characterized in that**
- the client computer comprises a first filter of the multitude of filters (90-94),
- the first filter has a filter setting (50) for restricting and prohibiting data transfer of raw digital data generated by the first measuring device and/or processed digital data generated by the first data processing unit (71, 72) between the client computer and other local systems, the filter setting being defined considering at least a legal framework (81, 82) applicable at the first location, wherein filter settings (50) are defined for at least a subset of possible combinations of roles (R1-R4) and remote locations (L1-L4), the subset comprising at least four combinations;
- the client computer is configured to generate one or more abstracted versions of a set of raw or processed digital data, wherein generating an abstracted version comprises deleting, encrypting and/or aggregating, based on the filter setting (50), information of the set of raw or processed digital data; and
- the client computer is configured to provide, upon receiving a request to transfer a first set of digital data to a second local system and depending on the filter setting (50) and based on a decision from the decision engine, the first set of digital data or an abstracted version of the first set of digital data to the second local system.

11. Client computer according to claim 10,
**characterized in that**
the client computer is configured, upon receiving the request to transfer the first set of digital data to a second local system, to generate the abstracted version of the first set of digital data and to provide the abstracted version to the second local system.

12. Client computer according to claim 10 or claim 11,
**characterized in that**
the client computer comprises a computing unit (22), a memory unit (24) and a first communication unit (26), wherein the first local system (10) comprises a plurality of software agents (30a-d) that are adapted to be used with a plurality of electronic apparatuses (40a-d) that are configured as data acquisition devices (73, 74), particularly as measuring devices, wherein each software agent (30a-d) is
- installable on an electronic apparatus (40a-d) of the plurality of electronic apparatuses (40a-d) or
- installed on a communication module that is adapted to be connected to one of the electronic apparatuses (40a-d) and to exchange data with the apparatus (40a-d) connected to,
wherein each software agent (30a-d) is adapted to exchange data with the electronic apparatus (40a-d) it is installed on or connected to, and wherein the first communication unit (26) and the software agents (30a-d) are configured for providing data transfer between the electronic apparatuses (40a-d) and the client computer.

13. Computer-implemented method for controlling access to digital data using a computer system according to any one of claims 1 to 8,
the method comprising
- defining a filter setting (50) for each filter (90-94) based at least on a legal framework (81, 82) applicable at the location of the local system to which the filter is assigned, the filter setting (50) restricting and prohibiting data transfer between the assigned local system and other local systems;
- deciding, upon receiving a request to present a first set of digital data to a first user, in real time, by means of a decision engine and based at least on the filter settings (50) and on the role (R1-R4) of the first user, at which one or more data processing units (71, 72) raw data is to be processed to generate the first set of digital data;
- processing, according to the decision, the raw data at the one or more data processing units (71, 72) to generate the first set of digital data
- deciding in real time, by means of the decision engine and based on the role (R1-R4) of the first user which information is included in the first set of digital data and how the information is presented to the first user; and
- presenting the first set of digital data to the first user.

14. Method according to claim 13,
**characterized in that**
presenting the information comprises generating and presenting at least one diagram.

15. Computer programme product comprising programme code which is stored on a machine-readable medium, or being embodied by an electromagnetic wave comprising a programme code segment, and having computer-executable instructions for performing, in particular when run on a computer system (1) according to any one of claims 1 to 8, the method according to claim 13 or claim 14.

## Patentansprüche

1. Computersystem (1) zur Steuerung des Zugriffs auf digitale Daten und Algorithmen, wobei das System mehrere lokale Systeme umfasst, die an mehreren entfernten Orten (L1-L4) bereitgestellt sind und eine Datenverbindung aufweisen, welche ein Übertragen digitaler Daten zwischen den lokalen Systemen ermöglicht, wobei
- mindestens eine erste Teilmenge der mehreren lokalen Systeme mindestens eine Datenerfassungsvorrichtung (73, 74) umfasst, die dazu ausgelegt ist, digitale Rohdaten zu erzeugen und bereitzustellen, wobei die mindestens eine Datenerfassungsvorrichtung (73, 74) mindestens eine Messvorrichtung umfasst, die dazu ausgelegt ist, Messdaten als digitale Rohdaten zu erzeugen und bereitzustellen;
- mindestens eine zweite Teilmenge der mehreren lokalen Systeme mindestens eine Datenverarbeitungseinheit (71, 72) mit einem Speicher mit einer Speicherkapazität und einem Prozessor mit einer Rechenkapazität umfasst; und
- jede Datenverarbeitungseinheit (71, 72) dazu konfiguriert ist, die digitalen Rohdaten, einschließlich der Messdaten, zu verarbeiten und verarbeitete digitale Daten, einschließlich verarbeiteter Messdaten, zu erzeugen, die für einen oder mehrere von mehreren Benutzern des Systems (1) dargestellt werden, wobei jeder Benutzer eine von mehreren Rollen (R1-R4) aufweist,
**dadurch gekennzeichnet, dass**
das System (1) ferner eine Entscheidungsmaschine und ein Filtersystem, umfassend mehrere Filter (90-94), umfasst, wobei
- mindestens ein Filter (90-94) an jedem lokalen System zugewiesen ist, insbesondere ein Satz von zwei Filtern, der eine bidirektionale Ein- und Ausgangsfilterungsfähigkeit implementiert, wobei jeder Filter eine Filtereinstellung (50) zum Einschränken und Verhindern einer Datenübertragung zwischen dem zugewiesenen lokalen System und anderen lokalen Systemen aufweist, wobei die Filtereinstellung mindestens einen rechtlichen Rahmen (81, 82) berücksichtigt, der an dem Ort des zugewiesenen lokalen Systems anwendbar ist, wobei Filtereinstellungen (50) für mindestens eine Teilmenge von möglichen Kombinationen von Rollen (R1-R4) und entfernten Orten (L1-L4) definiert sind, wobei die Teilmenge mindestens vier Kombinationen umfasst;
- das Computersystem dazu konfiguriert ist, eine oder mehrere abstrahierte Versionen eines Satzes roher oder verarbeiteter digitaler Daten zu erzeugen, wobei das Erzeugen der einen oder mehreren abstrahierten Versionen Löschen, Verschlüsseln und/oder Aggregieren, auf der Grundlage einer oder mehrerer der Filtereinstellungen (50), von Informationen des Satzes roher oder verarbeiteter digitaler Daten umfasst; und
- die Entscheidungsmaschine dazu konfiguriert ist, nach Empfangen einer Anforderung zum Darstellen eines ersten Satzes digitaler Daten für einen ersten Benutzer in Echtzeit und mindestens auf der Grundlage der Filtereinstellungen (50) und der Rolle (R1-R4) des ersten Benutzers zu entscheiden, an welcher oder welchen Datenverarbeitungseinheiten (71, 72) Rohdaten zu verarbeiten sind, um den ersten Satz digitaler Daten zu erzeugen,
wobei zum Entscheiden, an welcher Datenverarbeitungseinheit (71, 72) die Rohdaten zu verarbeiten sind, die Entscheidungsmaschine dazu konfiguriert ist, eine Optimierung auf der Grundlage der Filtereinstellung (50) jedes lokalen Systems auszuführen, und ferner mindestens eine Teilmenge von Folgendem berücksichtigt:
- einer erforderlichen oder wünschenswerten Verarbeitungsgeschwindigkeit,
- einer Netzlatenz,
- einem erforderlichen oder wünschenswerten Detailgrad der rohen und/oder verarbeiteten digitalen Daten, und
- einer Auslastung der Speicherkapazitäten und/oder Rechenkapazitäten der Recheneinheiten.

2. Computersystem (1) nach Anspruch 1,
**dadurch gekennzeichnet, dass**
die Entscheidungsmaschine auf einem Server-Computer an einem oder mehreren der mehreren Orte (L1-L4) und/oder durch Cloud Computing bereitgestellt ist.

3. Computersystem (1) nach Anspruch 1 oder Anspruch 2,
**dadurch gekennzeichnet, dass**
die Entscheidungsmaschine ferner dazu konfiguriert ist, in Echtzeit zu entscheiden, welche Informationen in den ersten Satz digitaler Daten aufzunehmen sind und wie die Informationen für den ersten Benutzer darzustellen sind, wobei das Darstellen der Informationen insbesondere Erzeugen und Darstellen mindestens eines Diagramms umfasst.

4. Computersystem (1) nach einem der vorhergehenden Ansprüche,
**dadurch gekennzeichnet, dass**
die Entscheidungsmaschine dazu konfiguriert ist, die Optimierung auf der Grundlage einer tatsächlichen und/oder prognostizierten Menge von Folgendem auszuführen:
- digitalen Rohdaten, die durch die Messvorrichtungen bereitgestellt sind, und/oder
- verarbeiteten digitalen Daten, die per Anforderung darzustellen sind.

5. Computersystem (1) nach einem der vorhergehenden Ansprüche,
**dadurch gekennzeichnet, dass**
die Filtereinstellungen (50) Folgendes berücksichtigen:
- rechtliche Rahmen (81, 82), die an mehreren Orten (L1-L4) anwendbar sind, und/oder
- Bestimmungen eines Vertrages (83, 84), der mindestens am Ort des zugewiesenen lokalen Systems anwendbar ist, wobei das Löschen von Informationen aus dem Satz roher oder verarbeiteter digitaler Daten auf den rechtlichen Rahmen (81, 82) und/oder Verträgen (83, 84) basiert.

6. Computersystem (1) nach Anspruch 5,
**dadurch gekennzeichnet, dass**
das Löschen von Informationen aus dem Satz roher oder verarbeiteter digitaler Daten Löschen von Folgendem umfasst:
- personenbezogenen Daten,
- Informationen, die als Geschäftsgeheimnisse gelten, und/oder
- Informationen, die Technologieübertragungseinschränkungen oder der Exportkontrolle unterliegen.

7. Computersystem (1) nach einem der vorhergehenden Ansprüche,
**dadurch gekennzeichnet, dass**
für jede der Kombinationen Filtereinstellungen (50) für einen gegenwärtigen Zeitpunkt oder Zeitraum (t) und mindestens einen zukünftigen Zeitpunkt oder Zeitraum (t1, t2) definiert sind, wobei ein rechtlicher Rahmen (81, 82) berücksichtigt wird, der am Ort des zugewiesenen lokalen Systems zu dem gegenwärtigen Zeitpunkt oder Zeitraum (t) und mindestens einem zukünftigen Zeitpunkt oder Zeitraum (t1, t2) anwendbar ist.

8. Computersystem (1) nach einem der vorhergehenden Ansprüche,
**dadurch gekennzeichnet, dass**
ein erstes lokales System (10) der mehreren lokalen Systeme mehrere Software-Agenten (30a-d) umfasst, die dazu ausgelegt sind, mit mehreren elektronischen Einrichtungen (40a-d) verwendet zu werden, die als Datenerfassungsvorrichtungen (73, 74), insbesondere als Messvorrichtungen, konfiguriert sind, wobei jeder Software-Agent (30a-d)
- auf einer elektronischen Einrichtung (40a-d) der mehreren elektronischen Einrichtungen (40a-d) installierbar ist oder
- auf einem Kommunikationsmodul installiert ist, das dazu ausgelegt ist, mit einer der elektronischen Einrichtungen (40a-d) verbunden zu werden und mit der verbundenen Einrichtung (40a-d) Daten auszutauschen,
wobei jeder Software-Agent (30a-d) dazu ausgelegt ist, Daten mit der elektronischen Einrichtung (40a-d) auszutauschen, auf der er installiert ist oder mit der er verbunden ist.

9. Computersystem (1) nach einem der Ansprüche 1 bis 8, umfassend einen Server-Computer, wobei der Server-Computer die Entscheidungsmaschine umfasst.

10. Computersystem (1) nach einem der Ansprüche 1 bis 8, umfassend einen Client-Computer, wobei der Client-Computer Teil eines ersten lokalen Systems (10) an einem ersten Ort ist, wobei das erste lokale System mindestens eine erste Messvorrichtung oder eine erste Datenverarbeitungseinheit (71, 72) umfasst und der Client-Computer zu der ersten Datenerfassungsvorrichtung (73, 74) und/oder der ersten Datenverarbeitungseinheit (71, 72) des ersten lokalen Systems zugewiesen ist,
**dadurch gekennzeichnet, dass**
- der Client-Computer einen ersten Filter der mehreren Filter (90-94) umfasst,
- der erste Filter eine Filtereinstellung (50) zum Einschränken und Verhindern einer Datenübertragung von digitalen Rohdaten, die durch die erste Messvorrichtung erzeugt werden, und/oder von verarbeiteten digitalen Daten, die durch die erste Datenverarbeitungseinheit (71, 72) erzeugt werden, zwischen dem Client-Computer und anderen lokalen Systemen aufweist, wobei die Filtereinstellung unter Berücksichtigung mindestens eines rechtlichen Rahmens (81, 82), der an dem ersten Ort anwendbar ist, definiert ist, wobei Filtereinstellungen (50) für mindestens eine Teilmenge von möglichen Kombinationen von Rollen (R1-R4) und entfernten Orten (L1-L4) definiert sind, wobei die Teilmenge mindestens vier Kombinationen umfasst;
- der Client-Computer dazu konfiguriert ist, eine oder mehrere abstrahierte Versionen eines Satzes roher oder verarbeiteter digitaler Daten zu erzeugen, wobei das Erzeugen einer abstrahierten Version Löschen, Verschlüsseln und/oder Aggregieren, auf der Grundlage der Filtereinstellung (50), von Informationen des Satzes roher oder verarbeiteter digitaler Daten umfasst; und
- der Client-Computer dazu konfiguriert ist, nach Empfangen einer Anforderung zum Übertragen eines ersten Satzes digitaler Daten an ein zweites lokales System und in Abhängigkeit von der Filtereinstellung (50) und auf der Grundlage einer Entscheidung der Entscheidungsmaschine den ersten Satz digitaler Daten oder eine abstrahierte Version des ersten Satzes digitaler Daten an das zweite lokale System bereitzustellen.

11. Client-Computer nach Anspruch 10,
**dadurch gekennzeichnet, dass**
der Client-Computer dazu konfiguriert ist, nach dem Empfangen der Anforderung zum Übertragen des ersten Satzes digitaler Daten an ein zweites lokales System die abstrahierte Version des ersten Satzes digitaler Daten zu erzeugen und die abstrahierte Version an das zweite lokale System bereitzustellen.

12. Client-Computer nach Anspruch 10 oder Anspruch 11,
**dadurch gekennzeichnet, dass**
der Client-Computer eine Recheneinheit (22), eine Speichereinheit(24) und eine erste Kommunikationseinheit (26) umfasst, wobei das erste lokale System (10) mehrere Software-Agenten (30a-d) umfasst, die dazu ausgelegt sind, mit mehreren elektronischen Einrichtungen (40a-d) verwendet zu werden, die als Datenerfassungsvorrichtungen (73, 74), insbesondere als Messvorrichtungen, konfiguriert sind, wobei jeder Software-Agent (30a-d)
- auf einer elektronischen Einrichtung (40a-d) der mehreren elektronischen Einrichtungen (40a-d) installierbar ist oder
- auf einem Kommunikationsmodul installiert ist, das dazu ausgelegt ist, mit einer der elektronischen Einrichtungen (40a-d) verbunden zu werden und mit der verbundenen Einrichtung (40a-d) Daten auszutauschen,
wobei jeder Software-Agent (30a-d) dazu ausgelegt ist, Daten mit der elektronischen Einrichtung (40a-d) auszutauschen, auf der er installiert ist oder mit der er verbunden ist, und wobei die erste Kommunikationseinheit (26) und die Software-Agenten (30a-d) dazu konfiguriert sind, eine Datenübertragung zwischen den elektronischen Einrichtungen (40a-d) und dem Client-Computer bereitzustellen.

13. Computerimplementiertes Verfahren zur Steuerung des Zugriffs auf digitale Daten unter Verwendung eines Computersystems nach einem der Ansprüche 1 bis 8,
wobei das Verfahren Folgendes umfasst:
- Definieren einer Filtereinstellung (50) für jeden Filter (90-94) mindestens auf der Grundlage eines rechtlichen Rahmens (81, 82), der am Ort des lokalen Systems anwendbar ist, zu dem der Filter zugewiesen ist, wobei die Filtereinstellung (50) eine Datenübertragung zwischen dem zugewiesenen lokalen System und anderen lokalen Systemen einschränkt und verhindert;
- Entscheiden, nach Empfangen einer Anforderung zum Darstellen eines ersten Satzes digitaler Daten für einen ersten Benutzer, in Echtzeit, durch eine Entscheidungsmaschine und mindestens auf der Grundlage der Filtereinstellungen (50) und der Rolle (R1-R4) des ersten Benutzers, an welcher oder welchen Datenverarbeitungseinheiten (71, 72) Rohdaten zu verarbeiten sind, um den ersten Satz digitaler Daten zu erzeugen;
- Verarbeiten, gemäß der Entscheidung, der Rohdaten an der einen oder den mehreren Datenverarbeitungseinheiten (71, 72), um den ersten Satz digitaler Daten zu erzeugen
- Entscheiden in Echtzeit, durch die Entscheidungsmaschine und auf der Grundlage der Rolle (R1-R4) des ersten Benutzers, welche Informationen in den ersten Satz digitaler Daten aufzunehmen sind und wie die Informationen für den ersten Benutzer darzustellen sind; und
- Darstellen des ersten Satzes digitaler Daten für den ersten Benutzer.

14. Verfahren nach Anspruch 13,
**dadurch gekennzeichnet, dass**
das Darstellen der Informationen Erzeugen und Darstellen mindestens eines Diagramms umfasst.

15. Computerprogrammprodukt, umfassend Programmcode, der auf einem maschinenlesbaren Medium gespeichert ist oder durch eine elektromagnetische Welle verkörpert ist, umfassend ein Programmcodesegment und aufweisend computerausführbare Anweisungen zum Durchführen des Verfahrens nach Anspruch 13 oder Anspruch 14, insbesondere bei Ausführung auf einem Computersystem (1) nach einem der Ansprüche 1 bis 8.

## Revendications

1. Système informatique (1) pour contrôler l'accès aux données numériques et aux algorithmes, le système comprenant une multitude de systèmes locaux qui sont fournis à une pluralité d'emplacements distants (L1 à L4) et ont une connexion de données qui permet de transférer des données numériques entre les systèmes locaux, dans lequel
- au moins un premier sous-ensemble de la multitude de systèmes locaux comprend au moins un dispositif d'acquisition de données (73, 74) qui est adapté pour générer et fournir des données numériques brutes, le au moins un dispositif d'acquisition de données (73, 74) comprenant au moins un dispositif de mesure qui est adapté pour générer et fournir des données de mesure comme données numériques brutes ;
- au moins un second sous-ensemble de la multitude de systèmes locaux comprend au moins une unité de traitement de données (71, 72) ayant une mémoire avec une capacité de mémoire et un processeur avec une capacité de calcul ; et
- chaque unité de traitement de données (71, 72) est configurée pour traiter les données numériques brutes incluant les données de mesure et pour générer des données numériques traitées incluant des données de mesure traitées à présenter à un ou plusieurs parmi une pluralité d'utilisateurs du système (1), chaque utilisateur ayant un rôle parmi une pluralité de rôles (R1 à R4),
**caractérisé en ce que**
le système (1) comprend en outre un moteur de décision et un système de filtre comprenant une multitude de filtres (90 à 94), dans lequel
- au moins un filtre (90 à 94) est attribué à chaque système local, en particulier un ensemble de deux filtres mettant en œuvre une capacité de filtrage bidirectionnel entrant et sortant, chaque filtre ayant un réglage de filtre (50) pour limiter et interdire le transfert de données entre le système local attribué et d'autres systèmes locaux, le réglage de filtre considérant au moins un cadre juridique (81, 82) applicable à l'emplacement du système local attribué, dans lequel les réglages de filtre (50) sont définis pour au moins un sous-ensemble de combinaisons possibles de rôles (R1 à R4) et d'emplacements distants (L1 à L4), le sous-ensemble comprenant au moins quatre combinaisons ;
- le système informatique est configuré pour générer une ou plusieurs versions abrégées d'un ensemble de données numériques brutes ou traitées, dans lequel la génération d'une ou plusieurs versions abrégées comprend la suppression, le cryptage et/ou l'agrégation, par rapport à un ou plusieurs des réglages de filtre (50), d'informations de l'ensemble de données numériques brutes ou traitées ; et
- le moteur de décision est configuré, lors de la réception d'une demande de présentation d'un premier ensemble de données numériques à un premier utilisateur, pour décider en temps réel et sur la base d'au moins les réglages de filtre (50) et du rôle (R1 à R4) du premier utilisateur, dans laquelle des une ou plusieurs unités de traitement de données (71, 72) les données brutes doivent être traitées pour générer le premier ensemble de données numériques,
dans lequel, pour décider dans quelle unité de traitement de données (71, 72) les données brutes doivent être traitées, le moteur de décision est configuré pour exécuter une optimisation sur la base du réglage de filtre (50) de chaque système local et prend en outre en considération au moins un sous-ensemble constitué de :
- une vitesse de traitement nécessaire ou souhaitable,
- une latence de réseau,
- un niveau de détail nécessaire ou souhaitable des données numériques brutes et/ou traitées, et
- une utilisation des capacités de mémoire et/ou des capacités de calcul des unités de calcul.

2. Système informatique (1) selon la revendication 1, **caractérisé en ce que**
le moteur de décision est fourni sur un ordinateur serveur à un ou plusieurs parmi la pluralité d'emplacements (L1 à L4) et/ou au moyen de l'informatique en nuage.

3. Système informatique (1) selon la revendication 1 ou la revendication 2,
**caractérisé en ce que**
le moteur de décision est en outre configuré pour décider en temps réel quelles informations sont incluses dans le premier ensemble de données numériques et comment les informations sont présentées au premier utilisateur, en particulier dans lequel la présentation des informations comprend la génération et la présentation d'au moins un diagramme.

4. Système informatique (1) selon l'une quelconque des revendications précédentes,
**caractérisé en ce que**
le moteur de décision est configuré pour exécuter l'optimisation sur la base d'une quantité réelle et/ou prévisionnelle de
- données numériques brutes fournies par les dispositifs de mesure et/ou
- données numériques traitées dont la présentation est demandée.

5. Système informatique (1) selon l'une quelconque des revendications précédentes,
**caractérisé en ce que**
les réglages de filtrage (50) considèrent
- des cadres juridiques (81, 82) applicables à une pluralité d'emplacements (L1 à L4) et/ou
- des dispositions d'un contrat (83, 84) applicables au moins à l'emplacement du système local attribué,
dans lequel la suppression d'informations de l'ensemble de données numériques brutes ou traitées est basée sur les cadres juridiques (81, 82) et/ou les contrats (83, 84) .

6. Système informatique (1) selon la revendication 5, **caractérisé en ce que**
la suppression d'informations de l'ensemble des données numériques brutes ou traitées comprend la suppression
- des données personnelles,
- des informations considérées comme des secrets commerciaux, et/ou
- des informations soumises à des limitations de transfert de technologie ou à un contrôle des exportations.

7. Système informatique (1) selon l'une quelconque des revendications précédentes,
**caractérisé en ce que**
pour chacune des combinaisons, des réglages de filtre (50) sont définis pour un point temporel ou une période présent(e) (t) et au moins un point temporel ou une période futur(e) (t1, t2), en considérant un cadre juridique (81, 82) applicable à l'emplacement du système local attribué au point temporel ou à la période présent(e) (t) et à au moins un point temporel ou une période futur(e) (t1, t2).

8. Système informatique (1) selon l'une quelconque des revendications précédentes,
**caractérisé en ce que**
un premier système local (10) de la multitude de systèmes locaux comprend une pluralité d'agents logiciels (30a à d) qui sont adaptés pour être utilisés avec une pluralité d'appareils électroniques (40a à d) qui sont configurés comme dispositifs d'acquisition de données (73, 74), en particulier comme dispositifs de mesure, dans lequel chaque agent logiciel (30a à d) est
- installable sur un appareil électronique (40a à d) de la pluralité d'appareils électroniques (40a à d) ou
- installé sur un module de communication qui est adapté pour être connecté à l'un des appareils électroniques (40a à d) et pour échanger des données avec l'appareil (40a à d) auquel il est connecté,
dans lequel chaque agent logiciel (30a à d) est adapté pour échanger des données avec l'appareil électronique (40a à d) sur lequel il est installé ou auquel il est connecté.

9. Système informatique (1) selon l'une des revendications 1 à 8 comprenant un ordinateur serveur, dans lequel l'ordinateur serveur comprend le moteur de décision.

10. Système informatique (1) selon l'une des revendications 1 à 8 comprenant un ordinateur client, dans lequel l'ordinateur client fait partie d'un premier système local (10) à un premier emplacement, dans lequel le premier système local comprend au moins un premier dispositif de mesure ou une première unité de traitement de données (71, 72) et l'ordinateur client est attribué au premier dispositif d'acquisition de données (73, 74) et/ou à la première unité de traitement de données (71, 72) du premier système local,
**caractérisé en ce que**
- l'ordinateur client comprend un premier filtre de la multitude de filtres (90 à 94),
- le premier filtre a un réglage de filtre (50) pour limiter et interdire le transfert de données de données numériques brutes générées par le premier dispositif de mesure et/ou de données numériques traitées générées par la première unité de traitement de données (71, 72) entre l'ordinateur client et d'autres systèmes locaux, le réglage de filtre étant défini en considérant au moins un cadre juridique (81, 82) applicable au premier emplacement, dans lequel les réglages de filtre (50) sont définis pour au moins un sous-ensemble de combinaisons possibles de rôles (R1 à R4) et d'emplacements distants (L1 à L4), le sous-ensemble comprenant au moins quatre combinaisons ;
- l'ordinateur client est configuré pour générer une ou plusieurs versions abrégées d'un ensemble de données numériques brutes ou traitées, dans lequel la génération d'une version abrégée comprend la suppression, le cryptage et/ou l'agrégation, sur la base du réglage de filtre (50), d'informations de l'ensemble de données numériques brutes ou traitées ; et
- l'ordinateur client est configuré pour fournir, à la réception d'une demande de transfert d'un premier ensemble de données numériques à un deuxième système local et en fonction du réglage de filtre (50) et sur la base d'une décision du moteur de décision, le premier ensemble de données numériques ou une version abrégée du premier ensemble de données numériques au deuxième système local.

11. Ordinateur client selon la revendication 10,
**caractérisé en ce que**
l'ordinateur client est configuré, à la réception de la demande de transfert du premier ensemble de données numériques à un deuxième système local, pour générer la version abrégée du premier ensemble de données numériques et pour fournir la version abrégée au deuxième système local.

12. Ordinateur client selon la revendication 10 ou la revendication 11,
**caractérisé en ce que**
l'ordinateur client comprend une unité de calcul (22), une unité de mémoire (24) et une première unité de communication (26), dans lequel le premier système local (10) comprend une pluralité d'agents logiciels (30a à d) qui sont adaptés pour être utilisés avec une pluralité d'appareils électroniques (40a à d) qui sont configurés comme des dispositifs d'acquisition de données (73, 74), en particulier comme des dispositifs de mesure, dans lequel chaque agent logiciel (30a à d) est
- installable sur un appareil électronique (40a à d) de la pluralité d'appareils électroniques (40a à d) ou
- installé sur un module de communication qui est adapté pour être connecté à l'un des appareils électroniques (40a à d) et pour échanger des données avec l'appareil (40a à d) auquel il est connecté,
dans lequel chaque agent logiciel (30a à d) est adapté pour échanger des données avec l'appareil électronique (40a à d) sur lequel il est installé ou auquel il est connecté, et dans lequel la première unité de communication (26) et les agents logiciels (30a à d) sont configurés pour fournir un transfert de données entre les appareils électroniques (40a à d) et l'ordinateur client.

13. Procédé mis en œuvre par ordinateur pour contrôler l'accès à des données numériques à l'aide d'un système informatique selon l'une quelconque des revendications 1 à 8,
le procédé comprenant
- la définition d'un réglage de filtre (50) pour chaque filtre (90 à 94) sur la base d'au moins un cadre juridique (81, 82) applicable à l'emplacement du système local auquel le filtre est attribué, le réglage de filtre (50) limitant et interdisant le transfert de données entre le système local attribué et d'autres systèmes locaux ;
- le fait de décider, à la réception d'une demande de présentation d'un premier ensemble de données numériques à un premier utilisateur, en temps réel, au moyen d'un moteur de décision et sur la base au moins des réglages de filtre (50) et du rôle (R1 à R4) du premier utilisateur, dans laquelle des une ou plusieurs unités de traitement de données (71, 72) les données brutes doivent être traitées pour générer le premier ensemble de données numériques ;
- le traitement, selon la décision, des données brutes dans les une ou plusieurs unités de traitement de données (71, 72) pour générer le premier ensemble de données numériques
- le fait de décider en temps réel, au moyen du moteur de décision et sur la base du rôle (R1 à R4) du premier utilisateur, quelles informations sont incluses dans le premier ensemble de données numériques et comment les informations sont présentées au premier utilisateur ; et
- la présentation du premier ensemble de données numériques au premier utilisateur.

14. Procédé selon la revendication 13,
**caractérisé en ce que**
la présentation des informations comprend la génération et la présentation d'au moins un diagramme.

15. Produit de programme informatique comprenant un code de programme qui est stocké sur un support lisible par une machine, ou étant incarné par une onde électromagnétique comprenant un segment de code de programme, et ayant des instructions exécutables par ordinateur pour réaliser, en particulier lorsqu'il est exécuté sur un système informatique (1) selon l'une quelconque des revendications 1 à 8, le procédé selon la revendication 13 ou la revendication 14.
